(19) **Europäisches Patentamt European Patent Office Office européen des brevets**

(11) **EP 4 749 320 A1**

(12) **EUROPEAN PATENT APPLICATION**

(43) Date of publication:
**27.05.2026 Bulletin 2026/22**

(21) Application number: **24215300.5**

(22) Date of filing: **26.11.2024**

(51) International Patent Classification (IPC):
**G01S 7/35** $^{(2006.01)}$   **G01S 13/08** $^{(2006.01)}$
**G01S 13/32** $^{(2006.01)}$   **G01S 13/34** $^{(2006.01)}$
**G01S 13/42** $^{(2006.01)}$

(52) Cooperative Patent Classification (CPC):
**G01S 13/42; G01S 7/354; G01S 13/08;
G01S 13/325; G01S 13/343**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Imec VZW
3001 Leuven (BE)**
• **Katholieke Universiteit Leuven
KU Leuven Research & Development
3000 Leuven (BE)**

(72) Inventors:
• **HAN, Kawon
3001 Heverlee (BE)**
• **BAUDUIN, Marc
1040 Brussel (BE)**
• **BOURDOUX, Andre
4910 Theux (BE)**

(74) Representative: **AWA Sweden AB
Matrosgatan 1
Box 5117
200 71 Malmö (SE)**

(54) **CODE-DIVISION MULTIPLEXING RADAR SYSTEM**

(57)   A Code-Division Multiplexing radar system, comprises:

a number $N_T$ transmitters, each configured to transmit a radar signal modulated by a unique code sequence, wherein one of the transmitters is configured to have a transmission power higher than the rest transmitters,

a number $N_R$ receivers, each configured to receive a reflection signal caused by the transmitted radar signals, and reflected by a target, and

a controller, configured to:
- generate a number $N$ virtual receive elements, for each virtual receive element $VX_{p,q}$:
- to detect the target,
- based on the detected target, to generate a reconstructed interference signal $\tilde{u}_{p,q}$ caused by the radar signals transmitted by the other transmitters except for the $qth$ radar signal, and
- to update a virtual receiving signal at said virtual receive element $VX_{p,q}$ based on the reconstructed interference signal $x^2$.

FIG. 5A

## Description

Technical field

The present description relates to a Code-Division Multiplexing (CDM) radar system, and a method for reducing mutual transmitter interferences for such CDM radar systems.

Background

Radar technology has been widely studied and used for a wide variety of applications, such as civilian, automotive, defence and space applications. There is a growing demand for advanced radar systems for various operational requirements.

A Multiple-Input-Multiple-Output (MIMO) radar system comprises a plurality of transmitters and a plurality of receivers. A Multiple-Input-Single-Output (MISO) radar system comprises a plurality of transmitters and one (single) receiver. The transmitters transmit a respective radar signal, which may be reflected by a target. The one or multiple receivers each receives a respective reflection signal reflected by the target. The MIMO radar system can provide a high angular resolution by using a small number of antennas.

The transmitted radar signals may be reflected by one or more targets and be received by each of the multiple receivers of the MIMO radar system, or by the single receiver of the MISO radar system. At each receiver, by using multiplexing technology, the plurality of transmitted radar signals may be separated. Currently, there are several different multiplexing schemes used in the MIMO or MISO radar systems.

Time Division Multiplexing (TDM) takes advantage of the time orthogonality between the plurality of transmitters (the plurality of transmitter antennas). Although TDM allows perfect orthogonal multiplexing in MIMO or MISO radar systems, the unambiguous velocity is reduced by a factor equal to the number of transmitters (the number of transmitter antennas).

Compared to TDM, Doppler Division Multiplexing (DDM), a particular subset of Code-Division Multiplexing (CDM), can enable simultaneously transmitting waveforms in all transmitters. In DDM MIMO or MISO, periodic phase codes are applied in the slow-time, which provide a virtual Doppler shift in the range-Doppler map. Although DDM can enjoy an increased processing gain compared to TDM, it still suffers from the same velocity ambiguity reduction as TDM.

The CDM MIMO or MISO radar system may use random phase code sequences to modulate the transmitted radar signals, where cross-correlations between the plurality of transmitters are not zero. Although the CDM MIMO or MISO radar system can avoid the reduction of unambiguous velocity, the sidelobe level in the fast-time (range) or slow-time (Doppler) spectrum increases due to residual interferences from other transmitters of the CDM MIMO or MISO radar system.

In the CDM MIMO or MISO radar system, the plurality of transmitters (the plurality of transmitter antennas) may simultaneously transmit randomly phase-coded radar signals. After reflecting from one or more targets, the reflection signals are received by the plurality of receivers (the plurality of receiver antennas), or by the single receiver (the single receiver antenna).

At each receiver of the CDM MIMO/MISO radar system, the received reflection signal (the transmitted radar signals reflected by the one or more targets) can be separated by using the phase code sequences, by which a virtual array of the CDM MIMO radar system can be generated. Consequently, a CDM MIMO or MISO radar system having a number $N_T$ transmitter and a number $N_R$ receivers can generate a number $N_T * N_R$ virtual receive elements. Each virtual receive element is obtained based on a unique transmitter-receiver pair.

However, since the phase code sequences are not perfectly orthogonal to each other, mutual transmitter interferences would result in an increase of sidelobe level in fast-time (range) or slow-time (Doppler) spectrum. Consequently, the dynamic range of such CDM MIMO or MISO radar system would severely decrease, and some targets may be submerged below the sidelobe level.

Hence, there is a need for an improved radar system.

Summary

An objective of the present description is to provide an improved CDM radar system, and a method for reducing mutual transmitter interferences of a CDM radar system.

To be specific, an objective of the present description is to provide a CDM radar system, by reducing mutual transmitter interferences, such that an improved target detection performance and an improved Direction of Arrival (DoA) estimation accuracy can be achieved.

Another objective of the present description is to provide a method for reducing mutual transmitter interferences of a CDM radar system with a low computational complexity.

According to a first aspect, there is provided a Code-Division Multiplexing (CDM) radar system, comprising:

a number $N_T$ transmitters, each configured to transmit a radar signal being modulated by a unique code sequence, $N_T > 1$, wherein a *mth* transmitter among the number $N_T$ transmitters is configured to have a transmission power $\gamma_m$ higher than the rest of the number $N_T$ transmitters, $1 \leq m \leq N_T$,

a number $N_R$ receivers, each configured to receive a reflection signal caused by the radar signals transmitted by the number $N_T$ transmitters, and reflected by a target, $N_R \geq 1$, and

a controller;
wherein the controller is configured:

- to generate a number $N$ virtual receive elements $VX$, $N = N_T * N_R$, wherein a virtual receiving signal at each virtual receive element $VX_{p,q}$ represents a signal being:

  i. received by a $pth$ receiver among the number $N_R$ receivers, $1 \leq p \leq N_R$, and
  ii. caused by a $qth$ radar signal transmitted by a $qth$ transmitter among the number $N_T$ transmitters, and reflected by the target, $1 \leq q \leq N_T$;

wherein for said each virtual receive element $VX_{p,q}$, the controller is configured:

- to detect the target based on a reflection signal caused by a $mth$ radar signal transmitted by the $mth$ transmitter, and reflected by the target,
- based on the detected target, to generate a reconstructed interference signal $\tilde{u}_{p,q}$ caused by the radar signals transmitted by the number $N_T$ trasmitters except for the $qth$ radar signal, and
- to update the virtual receiving signal at said each virtual receive element $VX_{p,q}$ based on the reconstructed interference signal $\tilde{u}_{p,q}$,

The numbers $N_T$, $N_R$, $N$, $m$, $p$, $q$ are natural numbers.
The number $N_T$ transmitters simultaneously transmit a respective radar signal being modulated by a unique code sequence.
The updated virtual receiving signal at said each virtual receive element $VX_{p,q}$ has a reduced mutual transmitter interference, which can provide an improved target detection performance and an improved DoA estimation accuracy.
Using the radar signal transmitted by a dominant transmitter, i.e. the $mth$ transmitter having a transmission power $\gamma_m$ (a dominant transmitter power) higher than that of the rest of the transmitters can improve the target detection accuracy, comparing to when all the transmitters have the same transmitting power.
Consequently, an improved target detection accuracy in the initial step (detecting the target) can reduce signal to mutual-interference-noise ratio (SMINR) of the generated virtual receive elements, which would eventually result in an improved target detection performance and DoA estimation.
Since the mutual transmitter interferences can be effectively reduced, a limited number of iterations would be sufficient for achieving a satisfying result, which would dramatically reduce the computational complexity comparing to the prior art, such as the CLEAN algorithm.
The controller may be configured to:

- for said each virtual receive element $VX_{p,q}$,

  S1) perform a slow-time and/or a fast-time processing,
  S2) detect the target based on a result of the processing of S1),
  S3) generate a reconstructed reflection signal, which is:

  i. received by the $pth$ receiver, and
  ii. caused by the $qth$ radar signal, and reflected by the target; and

- for said each virtual receive element $VX_{p,q}$,

  S4) generate a reconstructed interference signal $\tilde{u}_{p,q}$ based on reconstructed reflection signals of S3) for virtual receive elements $VX_{p,s}$, $1 \leq s \leq N_T, s \neq q$,
  S5) update the virtual receiving signal at said each virtual receive element $VX_{p,q}$ by subtracting the reconstructed interference signal $\tilde{u}_{p,q}$ for reducing mutual transmitter interferences.

The controller may be configured to generate the number $N$ virtual receive elements $VX$ based on the received reflections signals and the unique code sequences for modulating the radar signals transmitted by the number $N_T$ transmitters.
The controller may be configured to generate the reconstructed reflection signal based on the detected target and the unique code sequences for modulating the radar signals transmitted by the number $N_T$ transmitters.
The controller may be configured to generate the reconstructed reflection signal by performing an Inverse Discrete Fourier Transform, IDFT.
The controller may be configured to repeat S1 to S5 until a sidelobe level in the slow-time (Doppler) spectrum and/or fast-time (range) spectrum converges.
The controller may be configured to repeat S1 to S5, until a difference between the sidelobe level in the fast-time spectrum of a current iteration and that of a previous iteration is less than a first threshold, i.e. converges.
The controller may be configured to repeat S1 to S5, until a difference between the sidelobe level in the slow-time spectrum of a current iteration and that of a previous iteration is less than a second threshold, i.e. converges.
The first and the second threshold may be the same or different.
The controller may be configured to repeat S1 to S5 a pre-determined number of times, e.g., at least twice.
The controller may be configured to estimate a Direction of Arrival, DoA, of the target based on the updated virtual receiving signal at said each virtual receive element $VX_{p,q}$.
Each of the number $N_T$ transmitters may be configured to transmit a radar signal being modulated by the unique code sequence along fast-time or short-time.

A transmitting power $\gamma_1$ of each of said rest of the number $N_T$ transmitters may be the same.

$\gamma_m$ may be equal to $\beta\gamma_1$, $\gamma_m = \beta\gamma_1$. $\beta$ may be larger than 1. $\beta$ may be smaller or equal to 2, $\beta \le 2$.

The unique code sequence may be a phase-coded sequence.

Any of the slow-time processing and the fast-time processing may be a Discrete Fourier Transform, DFT.

The CDM radar system may be any of:

a Frequency-Modulated Continuous Wave, FMCW, radar system, and
a Phase-Modulated Continuous Wave, PMCW, radar system.

According to a second aspect, there is provided a method for reducing mutual transmitter interferences of a CDM radar system. The CDM radar system comprises a number $N_T$ transmitters, $N_T > 1$, and a number $N_R$ receivers, $N_R \ge 1$. The method comprises:

- each of the number $N_T$ transmitters transmitting a radar signal being modulated by a unique code sequence, wherein a *mth* transmitter among the number $N_T$ transmitters has a transmission power $\gamma_m$ higher than the rest of the number $N_T$ transmitters, $1 \le m \le N_T$;
- each of the number $N_R$ receivers receiving a reflection signal caused by the radar signals transmitted by the number $N_T$ transmitters, and reflected by a target;
- generating a number $N$ virtual receive elements $VX$, $N = N_T * N_R$, wherein a virtual receiving signal at each virtual receive element $VX_{p,q}$ represents a signal being:

    i. received by a *pth* receiver among the number $N_R$ receivers, $1 \le p \le N_R$, and
    ii. caused by a *qth* radar signal transmitted by a *qth* transmitter among the number $N_T$ transmitters, and reflected by the target, $1 \le q \le N_T$;

for said each virtual receive element $VX_{p,q}$,

- detecting the target based on a reflection signal caused by a *mth* radar signal transmitted by the *mth* transmitter, and reflected by the target,
- based on the detected target, generating a reconstructed interference signal $\tilde{u}_{p,q}$ caused by the radar signals transmitted by the number $N_T$ transmitters except for the *qth* radar signal,
- updating the virtual receiving signal at said each virtual receive element $VX_{p,q}$ based on the reconstructed interference signal $\tilde{u}_{p,q}$.

The method may comprise: for said each virtual receive element $VX_{p,q}$,

S1) performing a slow-time and/or a fast-time processing,
S2) detecting the target based on a result of the processing of S1),
S3) generating a reconstructed reflection signal, which is:

    i. received by the *pth* receiver, and
    ii. caused by the *qth* radar signal, and reflected by the target; and

- for said each virtual receive element $VX_{p,q}$,

S4) generating a reconstructed interference signal $\tilde{u}_{p,q}$ based on the reconstructed reflection signals of S3) for virtual receive elements $VX_{p,s}$, $1 \le s \le N_T$, $s \ne q$,
S5) updating the virtual receiving signal at said each virtual receive element $VX_{p,q}$ by subtracting the reconstructed interference signal $\tilde{u}_{p,q}$ for reducing mutual transmitter interferences.

The second aspect may generally present the same or corresponding advantages as the first aspect.

Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.

Fig. 1 is a schematic view of a MIMO radar system.
Fig. 2 is a simulation velocity profile.
Fig. 3A is a transmitter side block diagram.
Fig. 3B is a receiver side block diagram.
Fig. 4 is an example of code sequences.
Fig. 5A is an example of slow-time signal processing.
Fig. 5B is an example of fast-time signal processing.
Figs 6A- 6C are simulation results.
Figs 7A- 7B illustrate two different transmit power allocation schemes.
Fig. 7C is a plot of ISL versus SNR.
Figs 8A- 9 are comparison plots of different transmit power allocation schemes.

Detailed description

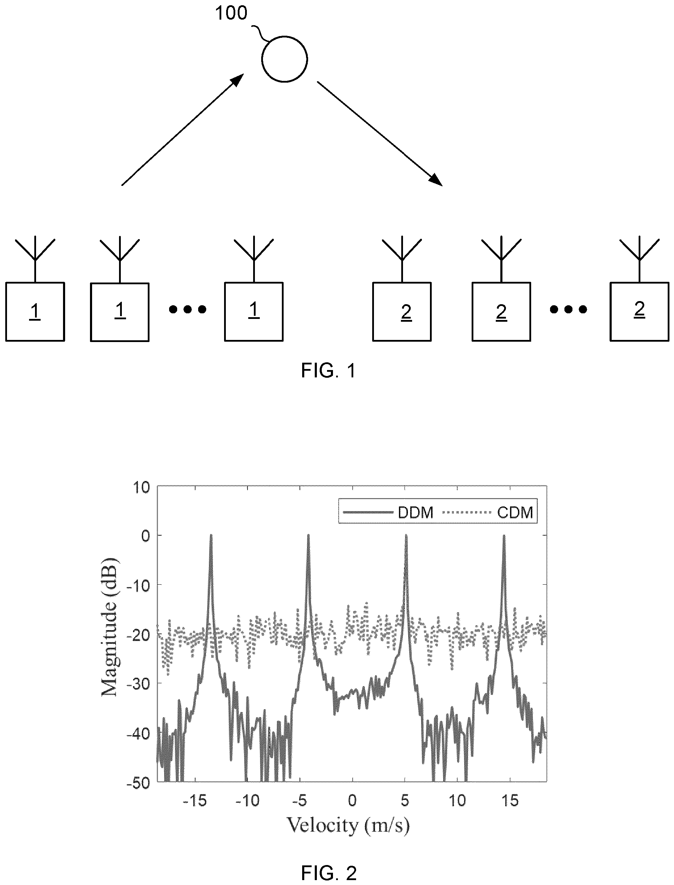

Fig. 1 illustrates an example of a MIMO radar system comprising a plurality of transmitters 1, e.g., a number $N_T$ transmitters 1, and a plurality of receivers 2, e.g., a number $N_R$ receivers 2.

The MIMO radar system of Fig. 1 is a CDM MIMO radar system. When $N_R = 1$, the radar system is a CDM MISO radar system.

The number $N_T$ transmitters 1 may each simultaneously transmit a radar signal. Each radar signal may be modulated by a unique code sequence.

A number $N_T$ radar signals may be simultaneously transmitted by the number $N_T$ transmitters 1. The number $N_T$ radar signals may be reflected by the target 100. Each of the number $N_R$ receivers 2 may respectively receive a reflection signal.

A controller (not shown) may process the received reflection signal(s) for performing target estimation regarding the target 100. The target estimation may involve one or more quantities related to the position of the target, such as a distance to the target, an elevation angle of the target, an azimuth angle of the target, etc. Further, the target estimation may involve one or more quantities related to movement of the target, such as a radial velocity, i.e. a radial component of the velocity of the target 100.

Fig. 2 shows an exemplary simulation velocity profile of one virtual receive element of a CDM MIMO radar system versus that of a DDM MIMO radar system, with slow-time coding. For simulation, four transmitters are utilized, and a quadrature phase shift keying (QPSK) constellation is used to apply phase codes to Frequency-Modulated Continuous Wave (FMCW) chirps. The total number of the FMCW chirps for Doppler estimation is 256. A single target of a velocity at 5 m/s is simulated.

In Fig. 2, the simulation result of the DDM MIMO radar system is shown in solid line, and the simulation result of the CDM MIMO radar system is shown in dotted line.

From the plot illustrated in Fig. 2, it is noted that the single target (the magnitude peak at 5 m/s) can be detected by both radar systems no matter CDM or DDM is used. Although using the CDM MIMO radar system, the result is free from the ambiguous velocity peaks that occur when using the DDM MIMO radar system, a much higher sidelobe level (about -20 dB) is resulted. Thus, if there is any other target having a magnitude below -20dB, such target cannot be detected by using the CDM MIMO radar system due to the high sidelobe levels.

The CLEAN algorithm is a known conventional approach which has been adopted in the CDM MIMO radar systems to resolve this issue. The CLEAN algorithm successively detects target in a certain domain and removes it to cancel out the effect of the increased sidelobe level due to that target. The CLEAN algorithm enables the CDM MIMO radar system to detect weaker targets submerged by the increased sidelobe level due to the strong target. It cancels the detected strong target to estimate weaker target. The CLEAN algorithm successively removes the detected target from the strongest one to the weakest one.

However, one disadvantage of the CLEAN algorithm is a high computational complexity as it requires the same number of iterations as the number of the targets. Another disadvantage is that since the detected target peak includes the effect of sidelobes, it degrades the accuracy of DoA estimation.

In conclusion, although the CDM MIMO radar system using the CLEAN algorithm has advantages over other MIMO multiplexing schemes in terms of Doppler ambiguity, its disadvantages, such as the increased sidelobe level, the high complexity of the implementation of the CLEAN algorithm, and the fact that the DoA performance cannot be improved by the CLEAN algorithm, makes it unusable for many applications. For example, since the phase codes of CDM are not perfectly orthogonal to each other, the residues from other transmitters of the CDM MIMO radar system may remain in the virtual receive element. The effect of these mutual transmitter interferences would result in the increase of the sidelobe level in either fast-time (range) or slow-time (Doppler) spectrum. Also, the mutual transmitter interferences degrade the DoA estimation accuracy of such CDM MIMO radar systems.

Although one purpose of the MIMO radar system is to exploit the virtual array having a larger aperture than the physical one, the mutual transmitter interferences reside in the virtual receive elements of the CDM MIMO radar system decrease the accuracy of the DoA estimation and increase the peak sidelobe level (PSL) in angular spectrum obtained by digital beamforming.

Therefore, the present description describes the CDM radar system and the method for reducing mutual transmitter interferences of the CDM radar system as follows.

The CDM radar system according to the present invention comprises a number $N_T$ transmitters 1 as the example of Fig. 1, each configured to transmit a radar signal being modulated by a unique code sequence, $N_T > 1$, wherein a $mth$ transmitter among the number $N_T$ transmitters is configured to have a transmission power $\gamma_m$ higher than the rest of the number $N_T$ transmitters 1, $1 \leq m \leq N_T$, a number $N_R$ receivers 2, each configured to receive a reflection signal caused by the radar signals transmitted by the number $N_T$ transmitters 1, and reflected by a target 100, $N_R \geq 1$, and a controller.

Since the unique code sequences for modulating the radar signals transmitted by the number $N_T$ transmitters 1 are not perfectly orthogonal to each other, the mutual transmitter interferences do exist.

The controller is configured:

- to generate a number $N$ virtual receive elements $VX$, $N = N_T * N_R$, wherein a virtual receiving signal at each virtual receive element $VX_{p,q}$ represents a signal being:

    i. received by a $pth$ receiver among the number $N_R$ receivers, $1 \leq p \leq N_R$, and
    ii. caused by a $qth$ radar signal transmitted by a $qth$ transmitter among the number $N_T$ transmitters, and reflected by the target, $1 \leq q \leq N_T$;

wherein for said each virtual receive element $VX_{p,q}$, the controller is configured:

- to detect the target based on a reflection signal caused by a *mth* radar signal transmitted by the *mth* transmitter, and reflected by the target,
- based on the detected target, to generate a reconstructed interference signal $\tilde{u}_{p,q}$ caused by the radar signals transmitted by the number $N_T$ transmitters except for the *qth* radar signal, and
- to update the virtual receiving signal at said each virtual receive element $VX_{p,q}$ based on the reconstructed interference signal $\tilde{u}_{p,q}$,

When a radar system comprising a plurality of transmitters (antennas) and a plurality of receivers (antennas) in an array work together to transmit and receive signals, the transmitters (antennas) and receivers (antennas) act like an equivalent array of antennas, known as a "virtual array". The virtual array is a fictitious entity, but it is useful for understanding the radar system's performance. At each receiver of the radar system, the received reflection signal (the transmitted radar signals reflected by the one or more targets) can be separated, by which the virtual array of the radar system can be generated.

For continuous wave radars, as those described in the present description, the transmitters and the receivers do operate simultaneously.

However, to create a virtual array, the transmitters and the receivers do not necessarily need to operate simultaneously. For example, for a pulsed radar, its transmitter sends short pulses and its receiver starts listening when the transmitter stops transmitting.

Consequently, a CDM MIMO or MISO radar system having a number $N_T$ transmitter and a number $N_R$ receivers can generate a number $N_T * N_R$ virtual receive elements. Each virtual receive element is obtained based on a unique transmitter-receiver pair.

The controller may comprise a circuit having processing capability, e.g., a processor, a MCU, a CPU.

The CDM radar system may be a CDM MIMO radar system, or a CDM MISO radar system. However, the CDM MIMO radar system is used as an example in the present description to discuss the inventive concept.

The CDM radar system may be a Frequency-Modulated Continuous Wave, FMCW, radar system, or a Phase-Modulated Continuous Wave, PMCW, radar system.

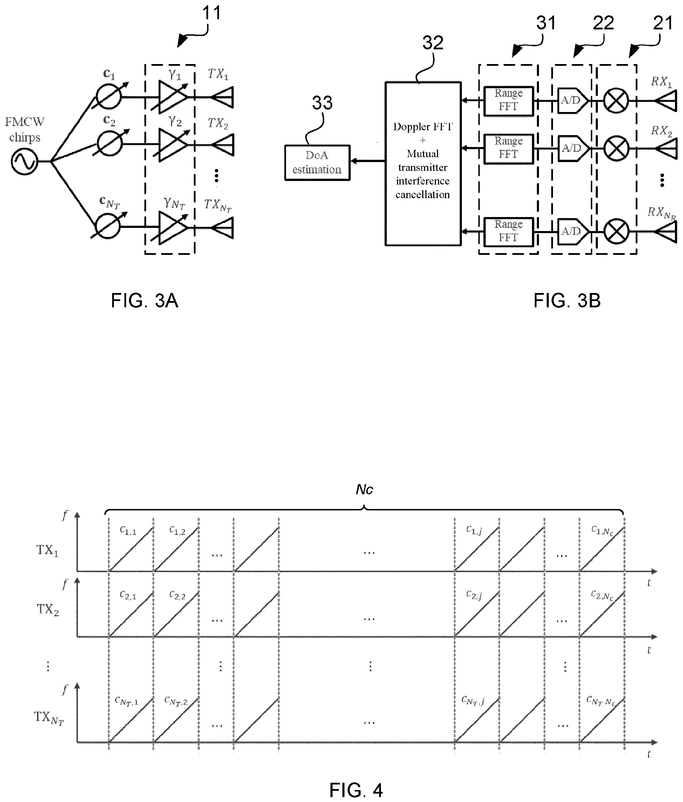

Fig. 3A is an example block diagram of the transmitter side of the CDM MIMO radar system, including the signal processing chain comprising multiple units.

The number $N_T$ transmitter signals $TX_1$, $TX_2$, ... $TX_{NT}$ may be respectively amplified by an amplifier 11. The transmitter signals $TX_1$, $TX_2$, ... $TX_{NT}$ may be respectively amplified to a same transmission power $\gamma$.

Alternatively, the number $N_T$ transmitter signals $TX_1$, $TX_2$, ... $TX_{NT}$ may be amplified to different transmission powers $\gamma_1$, $\gamma_2$, ... ,$\gamma_{NT}$, as shown in Fig. 3A.

Further, the amplified transmitter signals may also be individually modulated by applying a unique code sequence $c_1$, $c_2$, ... $c_{NT}$, before transmitting by antennas. Alternatively, the unique code sequence $c_1$, $c_2$, ... $c_{NT}$ can also be applied prior to the power amplification.

Each of the number $N_T$ transmitters 1 may thus be configured to transmit a radar signal being modulated by the unique code sequence $c_1$, $c_2$, ... $c_{NT}$ along fast-time or short-time.

Fig. 3B is an example block diagram of the receiver side of the CDM MIMO radar system, including the signal processing chain.

- The number $N_R$ received reflection signals $RX_1$, $RX_2$, ... $RX_{NR}$ may be respectively down-converted by a mixer 21. Further, each mixed signal may be converted to a digital signal by an Analog-Digital Converter (ADC) 22.

The digital signal may be further processed by the controller. The controller may comprise a plurality of modules for processing signals.

As shown in Fig. 3B, the down-converted digital signals may be respectively fast-time (range) processed by a first module 31 of the controller.

Thus, the outputs of the first modules 31 may be slow-time (Doppler) processed, and processed for reducing mutual transmitter interferences according to the present description, prior to DoA estimation, by a second module 32 of the controller.

Finally, a third module 33 of the controller may perform the DoA estimation based on the output of the second module 32.

In Fig. 3A and Fig. 3B, the multiple units of the transmitter side and the receiver side of the CDM MIMO radar system are illustrated as individual modules. However, these modules may be in the form of a single unit of multiple functions.

For example, the slow-time (Doppler) and the fast-time (range) processing may be Discrete Fourier Transform (DFT) in FMCW. In PMCW, the fast time processing may be done by correlators.

The unique code sequence may be a phase-coded sequence.

Fig. 4 is an example of the unique code sequences for an CDM MIMO radar system along slow-time.

The code sequences are unique (different) for each of the number $N_T$ transmitter signals $TX_1$, $TX_2$, ... $TX_{NT}$. The unique code sequence for each of the number $N_T$ transmitters may be random and uncorrelated.

The number $N_c$ may represent a length of each unique code sequence. The code sequence for a $q^{th}$ transmitter among the number $N_T$ transmitters, $1 \leq q \leq$

$N_T$ may be represented as $\mathbf{c_q} \in \mathbb{C}^{1 \times N_c}$. Here, $N_c$ equals to the number of chirps.

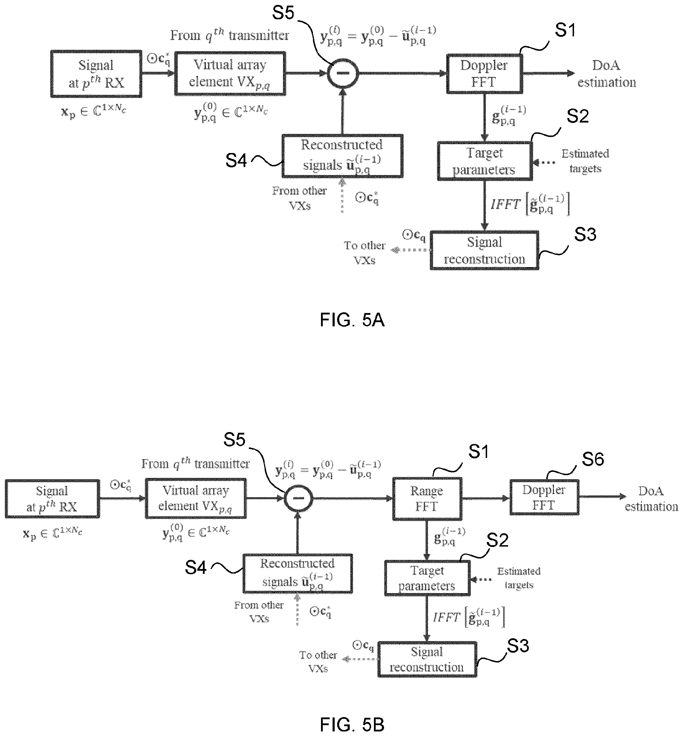

In connection with Fig. 5A, a slow-time (Doppler) signal processing example for reducing mutual transmitter interferences will be discussed in detail.

The term "fast-time" may refer to a small-scale time used to calculate the range. For example, multiple data samples of a single radar pulse may be measured along fast-time.

The term "slow-time" may refer to a large-scale time relative to the "fast-time" corresponding to multiple ranges' calculation. For example, multiple radar pulses may be measured along slow-time.

In this example, the slow-time signal processing at a *pth* receiver among the number $N_R$ receivers ($1 \le p \le N_R$) of the CDM MIMO radar system will be discussed.

The number $N_T$ transmitters of the CDM MIMO radar system simultaneously transmit a number $N_T$ radar signals. Each radar signal is modulated by a unique code sequence. As discussed in Fig. 4, the code sequence for the *qth* transmitter may be represented as $\mathbf{c_q} \in \mathbb{C}^{1 \times N_c}$.

The transmitted radar signals are reflected by one or more targets and summation of the reflected signals (caused by all TX signals) is received by each of the number $N_R$ receivers. For simplicity, a single target is used in the examples of the present description.

A virtual receiving signal at each virtual receive element $VX_{p,q}$ of the CDM MIMO radar system represents a signal, which is: 1) received by the *pth* receiver, and 2) caused by a *qth* radar signal transmitted by the *qth* transmitter and reflected by the target.

At each receiver, the transmitted signals can be separated from the summation of the reflected signals by using the unique code sequences for modulating the radar signals.

As shown in Fig. 5A, at the *pth* receiver, the received reflection signal can be multiplied by the conjugate of the unique code sequence $\mathbf{c_q}$ for modulating the *qth* radar signal transmitted by the *qth* transmitter, i.e., $\mathbf{c_q^*} \cdot \mathbf{x_p} \in \mathbb{C}^{1 \times N_c}$ denotes, at the *pth* receiver, a vector of multiple range bins along the slow-time, where a detection of the target occurs.

By multiply $\mathbf{c_q^*}$ with $x_p$, an initial value $\mathbf{y}_{p,q}^{(0)}$ of the virtual receive element $VX_{p,q}$ can be generated. In this example, the initial value $\mathbf{y}_{p,q}^{(0)}$ is a vector.

Thus, the number $N$ virtual receive elements $VX$ may be generated based on the received reflections signals and the unique code sequences.

This step can be performed the number $N$ times for each transmitter-receiver pair for generating the number $N$ virtual receive elements $VX$.

Since the virtual receiving signal at the virtual receive element $VX_{p,q}$ represents a signal being received by the *pth* receiver and caused by the *qth* radar signal transmitted by the *qth* transmitter and reflected by the target, for the virtual receive element $VX_{p,q}$, the sidelobe level in the slow-time (Doppler) spectrum is high, due to the mutual transmitter interferences caused by the other $N_T$ - 1 transmitters, except for the *qth* radar signal transmitted by the *qth* transmitter.

In the example of Fig. 5A, since the unique code sequence c is applied along the slow-time, the sidelobe level in the slow-time (Doppler) spectrum is high.

Even though the sidelobe level in the slow-time (Doppler) spectrum is high, at least one target is still detectable because the increased sidelobe level depends on the magnitude of target. However, other targets having lower magnitudes may not be detectable.

In connection with Fig. 5A, steps S1 to S5 for updating the virtual receiving signal of the virtual receive element $VX_{p,q}$ will be discussed in detail.

The step S1 is to process the virtual receive element $VX_{p,q}$, e.g., the initial vector $\mathbf{y}_{p,q}^{(0)}$, for detecting one or more targets in the slow-time (Doppler) spectrum.

The initial vector $\mathbf{y}_{p,q}^{(0)}$ may be slow-time (Doppler) processed, such as by a Discrete Fourier Transform, DFT, processing. The intermediate result of the slow-time processing may be denoted as $\mathbf{g}_{p,q}^{(0)}$.

The step S1 may be performed for each virtual receive element $VX$, such that the initial intermediate result g$^{(0)}$ is generated for each virtual receive element $VX$ for detecting the target(s).

The step S2 is to detect the target(s) based on the intermediate result $\mathbf{g}_{p,q}^{(0)}$ of the step S1.

The target(s) is detected based on a reflection signal caused by a *mth* radar signal transmitted by a *mth* transmitter, and reflected by the target, wherein the *mth* transmitter among the number $N_T$ transmitters is configured to have a transmission power $\gamma_m$ higher than the rest of the number $N_T$ transmitters, $1 \le m \le N_T$.

In the step 2, the target detection may determine one or more Doppler bins where a detection of the target(s) occurs.

Once the one or more Doppler bins of all targets is/are determined, all other Doppler bins may be set to zero ("0") except for the determined one or more Doppler bins.

By setting all other Doppler bins to zero ("0"), an updated signal $\tilde{\mathbf{g}}_{p,q}^{(0)}$ without the effect of other transmitters (except for the *qth* transmitter) can be generated for further processing.

The step S2 may be performed for each virtual receive element $VX$, such that the target(s) can be detected based on the initial intermediate result g$^{(0)}$ generated and the updated signal $\tilde{\mathbf{g}}^{(0)}$ without the effect of other transmitters can be generated for further processing, for each virtual receive element *VX*.

The step S3 is to reconstruct a reflection signal, which is received by the *pth* receiver, and caused by the *qth* radar signal, and reflected by the target, based on the updated signal $\tilde{\mathbf{g}}_{p,q}^{(0)}$ without the effect of other transmitters (except for the *qth* transmitter).

The reconstructed reflection signal may be generated based on the detected target and the unique code sequences.

The reconstructed reflection signal may be generated by performing an Inverse Discrete Fourier Transform, IDFT.

By firstly processing $\tilde{\mathbf{g}}_{p,q}^{(0)}$ , e.g., an inverse DFT (IDFT), and secondly by multiplying with the unique code sequence $\mathbf{c}_q$ for modulating the *qth* radar signal, a reflection signal caused by the *qth* radar signal and received by the *pth* receiver can be reconstructed. At the *pth* receiver, this reconstructed reflection signal is an interference to other radar signals except for the *qth* radar signal.

Thus, the reconstructed reflection signal can be used to cancel the mutual transmitter interferences for other virtual receive elements $VX_{p,s}$, $1 \le s \le N_T, s \ne q$.

The step S3 may be performed for each virtual receive element *VX*, such that the reconstructed reflection signals to cancel the mutual transmitter interferences for each virtual receive elements *VX*, can be reconstructed.

The step S4 is to generate a reconstructed interference signal $\tilde{\mathbf{u}}_{p,q}^{(0)}$ for the virtual receive element $VX_{p,q}$, based on the reconstructed reflection signals of the step S3. The reconstructed interference signal $\tilde{\mathbf{u}}_{p,q}^{(0)}$ is a summation of the reconstructed reflection signals caused by the radar signals except for the *qth* radar signal received by the *pth* receiver of the step S3.

For the virtual receive element $VX_{p,q}$, a reconstructed interference signal $\tilde{\mathbf{u}}_{p,q}^{(0)}$ is caused by the radar signals transmitted by the number $N_T$ transmitters except for the *qth* radar signal, which shall be removed from the virtual receive element $VX_{p,q}$ for reducing mutual transmitter interferences.

The step S4 may be performed for each virtual receive element *VX*, such that the reconstructed interference signal $\tilde{u}_{p,q}$ for removing the mutual transmitter interferences for each virtual receive elements *VX*, can be reconstructed.

The step S5 is to update the virtual receiving signal at the virtual receive element $VX_{p,q}$ for removing the mutual transmitter interferences based on the reconstructed interference signal $\tilde{u}_{p,q}$. The virtual receiving signal at the virtual receive element $VX_{p,q}$ may be updated by subtracting the reconstructed interference sig-

nal $\tilde{\mathbf{u}}_{p,q}^{(0)}$ . That is, the initial vector $\mathbf{y}_{p,q}^{(0)}$ , is updated to

$$\mathbf{y}_{p,q}^{(1)} = \mathbf{y}_{p,q}^{(0)} - \tilde{\mathbf{u}}_{p,q}^{(0)} .$$

By performing the above steps S1 to S5, the sidelobe level in the slow-time (Doppler) spectrum of a current iteration, i.e. the updated vector $\mathbf{y}_{p,q}^{(1)}$ is reduced, comparing to that of the initial vector $\mathbf{y}_{p,q}^{(0)}$ .Consequently, after updating the virtual receiving signal at the virtual receive element $VX_{p,q}$, due to the decreased sidelobe level, a weaker target having a lower magnitude may be detected.

The above steps S1 to S5 may be parallelly performed for each of the number *N* virtual receive elements *VX*, i.e. the virtual receive element $VX_{p,q}$, at each of the number $N_R$ receivers, $p = 1, 2, ... , N_R$, and from each of the number $N_T$ transmitters, $q = 1, 2, ... , N_T$, to remove the mutual transmitter interferences in each of the number *N* virtual receive elements *VX* of the CDM MIMO radar.

The above steps S1 to S5 for updating the virtual receiving signal at the virtual receive element $VX_{p,q}$ may be iterated multiple times (at least twice) to further reduce the mutual transmitter interferences.

The above steps S1 to S5 may be iterated until a sidelobe level in the slow-time (Doppler) spectrum converges. The above steps S1 to S5 may be iterated a predetermined number of times. The above steps S1 to S5 may be iterated until a difference between the sidelobe level in the slow-time (Doppler) spectrum of a current iteration and that of a previous iteration is less than a threshold, i.e. converges. The threshold may be determined based on the radar system architecture, the noise floor, etc.

- When the difference between the sidelobe level between two consecutive iterations is smaller than the threshold, the iteration procedure can be stopped. The updated virtual receiving signal at the virtual receive element $VX_{p,q}$ of the last iteration may be considered to be good enough for further processing, such as DoA estimation.

It is advantageous to have the above steps S1 to S5 (range processing) performed before the DoA estimation, as it may improve the DoA estimation. If the above steps S1 to S5 (range processing) are performed after the DoA estimation, the performance of the method of the present description, and the DoA estimation will be seriously degraded.

A DoA of the target may be estimated based on the updated virtual receiving signal at the virtual receive element $VX_{p,q}$ of the last iteration.

In connection with Fig. 5B, a fast-time (range) signal processing example for reducing mutual transmitter interferences will be discussed in detail.

The features of Fig. 5B which are the same or similar to those of Fig. 5A will not be discussed in detail.

The step S1 is to process the virtual receive element $VX_{p,q}$, e.g., the initial vector $\mathbf{y}_{p,q}^{(0)}$, for detecting one or more targets in the fast-time (range) spectrum. In this example, the initial vector $\mathbf{y}_{p,q}^{(0)}$) may be fast-time (range) processed, which is different from the step S1 of Fig. 5A.

The intermediate result of the fast-time processing may also be denoted as $\mathbf{g}_{p,q}^{(0)}$.

The fast-time (range) processing of the step S1 may be a Discrete Fourier Transform, DFT, processing, instead of being slow-time processed as shown in Fig. 5A.

If the CDM radar system is a PMCW radar system, the digital processing of the step S1 may be done by using correlators. The step S1 may be performed for each virtual receive element $VX$, such that the initial intermediate result $\mathbf{g}^{(0)}$ is generated for each virtual receive element $VX$ for detecting the target(s).

The steps S2 to S5 are similar to the steps S2 to S5 in Fig. 5A, and thus are not discussed in detail.

After updating the virtual receiving signal at the virtual receive element $VX_{p,q}$ at the step S5, due to the decreased sidelobe level, a weaker target having a lower magnitude may be detected.

The steps S1 to S5 for updating the virtual receiving signal at the virtual receive element $VX_{p,q}$ may be iterated multiple times (at least twice) to further reduce the mutual transmitter interferences.

The steps S1 to S5 may be iterated until a sidelobe level in the fast-time (range) spectrum converges.

The steps S1 to S5 may be iterated a predetermined number of times.

The steps S1 to S5 may be iterated until a difference between the sidelobe level in the fast-time (range) spectrum of a current iteration and that of a previous iteration is less than a threshold, i.e. converges. The threshold may be determined based on the radar system architecture, the noise floor, etc.

- When the sidelobe level difference between two consecutive iterations is smaller than the threshold, the iteration procedure can be stopped. The updated virtual receiving signal at the virtual receive element $VX_{p,q}$ of the last iteration may be considered to be good enough for further processing, such as DoA estimation.

As shown in Fig, 5B, prior to the DoA estimation, the updated virtual receive element $VX_{p,q}$ (the updated vector $\mathbf{y}_{p,q}^{(i)}$) may be slow-time (Doppler) processed (S6), such as by a Discrete Fourier Transform, DFT, processing.

A DoA of the target may be estimated based on the result of the step S6, i.e. the slow-time (Doppler) processing of the updated virtual receiving signal at the virtual receive element $VX_{p,q}$ of the last iteration.

A simulation was conducted to validate the effectiveness of the CDM MIMO radar system according to the present description. In this simulation, $N_T = N_R = 4$. That is, the CDM MIMO radar system has four transmitters and four receivers. There are 16 (4 * 4) virtual receive elements in total. The number of iterations is 3.

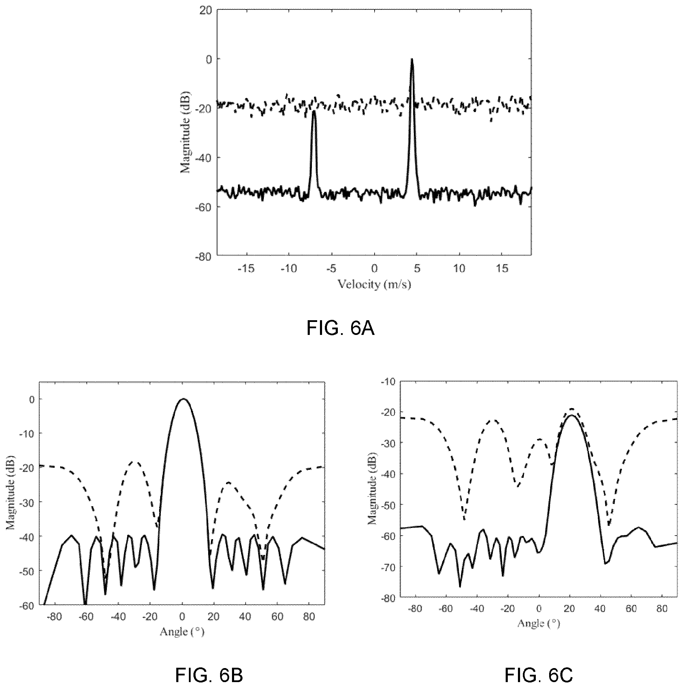

In Figs 6A- 6C, the simulation results of the conventional CDM MIMO radar system are shown in dashed line, and the simulation results of the conventional CDM MIMO radar system according to the present description are shown in solid line.

Fig. 6A shows the simulation results of two targets at a velocity of 5 m/s and -7 m/s, respectively. The magnitude of the first target signal at 5 m/s is about 0 dB, and the magnitude of the second target signal at -7 m/s is below -20 dB.

Both CDM MIMO radar systems can detect the first target signal at 5 m/s having the magnitude of about 0 dB.

With the conventional CDM MIMO radar system, the second target signal is not detectable due to the high sidelobe level (about -20 dB) resulted by the mutual transmitter interferences of the first target.

On the other hand, the CDM MIMO radar system of the present description can detect the second target signal at -7 m/s having the magnitude of below -20 dB, without any ambiguities.

In fact, the sidelobe level of the CDM MIMO radar system according to the present description is similar to that of the DDM MIMO radar system, which shows that the CDM MIMO radar system according to the present description successfully removes the effect caused by the mutual transmitter interferences.

Fig. 6B and Fig. 6C are simulated angular spectrum (DoA estimation) for the first and second target, respectively.

For both the first and second target, it can be seen that the CDM MIMO radar system according to the present description can reduce PSL compared that of the conventional CDM MIMO radar, as the mutual transmitter interferences would add phase errors to each virtual receive element, resulting in an increase of the sidelobe level of the MIMO radar beam pattern.

As shown in Figs 5A and 5B, the steps S1 to S5 of updating the virtual receive element depends on the detection of the target. Thus, a false target detection at the initial stage would add undesired noises, which would cause an increased sidelobe level. Thus, it is desirable to improve the accuracy of the target detection.

It is known that a false target detection rate exists, which is related to the target detection algorithms used, e.g., Constant False Alarm Rate (CFAR). In the CDM MIMO radar system according to the present description, the target is detected based on a reflection signal caused by a *mth* radar signal transmitted by the *mth* transmitter, which is configured to have a transmission power $\gamma_m$ higher than the rest of the number $N_T$ transmitters, $1 \le m \le N_T$, and reflected by the target. In other words, the CDM MIMO radar system according to the present description adopts a dominant transmit power allocation (DTPA) scheme.

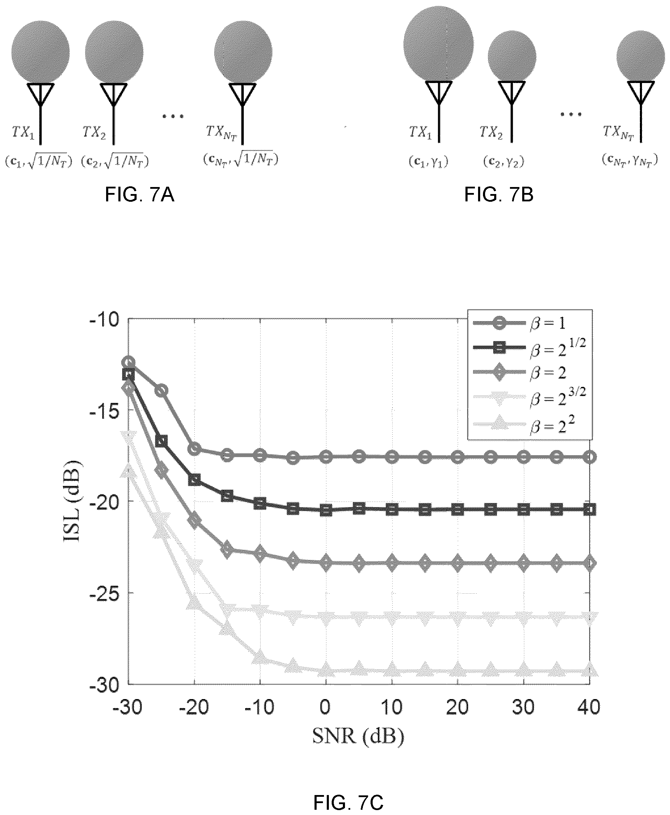

Figs 7A- 7B illustrate two different transmit power allocation schemes.

Fig. 7A illustrates equal transmit power allocation (ETPA), where all number $N_T$ transmitters emit radar signals of the same power.

If the allocated power to the *ith* transmitter is $\gamma_i$, and $\sum_{i=1}^{N_T} \gamma_i^2 = 1$, then in the ETPA scheme,

$$\gamma_1 = \gamma_2 = \cdots = \gamma_{N_T} = \sqrt{\frac{1}{N_T}}.$$

In contrast, if a mth transmitter among the number $N_T$ transmitters is configured to have a transmission power $\gamma_m$ higher than the rest of the number $N_T$ transmitters, $1 \le m \le N_T$, it is known to be a dominant transmit power allocation (DTPA)

Fig. 7B illustrates an example dominant transmit power allocation (DTPA), wherein $m = 1$.

As shown in Fig. 7B, the transmitting powers $\gamma_2, \ldots \gamma_{NT}$ of said rest of the number $N_T$ transmitters may be the same.

A scale factor $\beta$ may be introduced such that $\gamma_m = \beta \gamma_1$, $\beta > 1$. Preferably, $\beta \le 2$.

If the allocated power to the *ith* transmitter be $\gamma_i$, where $\sum_{i=1}^{N_T} \gamma_i^2 = 1$, then in Fig. 7B,

$$\gamma_1 = \beta \gamma_2 = \cdots = \beta \gamma_{N_T} = \sqrt{\frac{\beta^2}{\beta^2 + (N_T - 1)}}.$$

That is, the first transmitter (the transmitter having a transmission power higher than the rest of the transmitters) uses $\beta$ higher transmit power than other transmitters do.

The ETPA may be considered as a special case of the DTPA wherein $\beta = 1$. This definition of $\gamma_i$ allows a fair comparison between these two different schemes as the total transmit power is not affected by $\beta$.

Fig. 7C illustrates a simulated integrated sidelobe level, ISL, versus SNR for five different values of $\beta$, in a range of 1 to 4. In this simulation, $N_T = 4$. That is, the CDM MIMO radar system has four transmitters.

When $\beta = 1$ (ETPA), it is the ETPA scheme as shown in Fig. 7A.

In Fig. 7C, it can be seen that using the DTPA scheme can make the virtual receive element generated from the first transmitter robust to the interferences from other three transmitters ($N_T = 4$).

Since the power of the first transmitter is much higher than the other three transmitters, the effect of mutual transmitter interferences from other transmitters ($q \ne 1$) decreases in the virtual receive element $VX_{p,q}$, $q =$

1. Therefore, the target detection at the virtual receive element $VX_{p,q}$, $q = 1$ in the CDM MIMO radar system according to the present description can provide an improved target detection accuracy compared to a CDM MIMO radar system using ETPA scheme. Numerically, DTPA improves the sidelobe level as much as $10\log_{10}(\beta^2)$.

It is possible to utilize the noncoherent combination $NC$ of all virtual receive elements of a CDM MIMO radar system using the ETPA scheme. Here, the noncoherent combination $NC$ may refer to the summation of absolute values of $\mathbf{g}_{p,q}^{(0)}$ in Figs 5A- 5B for all number $N_T$ transmitters, $NC = \sum_{q=1}^{N_T} \left| \mathbf{g}_{p,q}^{(0)} \right|^2$

It is well known that the noncoherent combination of multiple measurements provides improved target detection performance by reducing the noise variance in the measured spectrum. To further explore the advantage of the CDM MIMO radar system according to the present description, comparisons of required thresholds with respect to given false alarm rates, are compared with that of noncoherent combination when using the ETPA scheme.

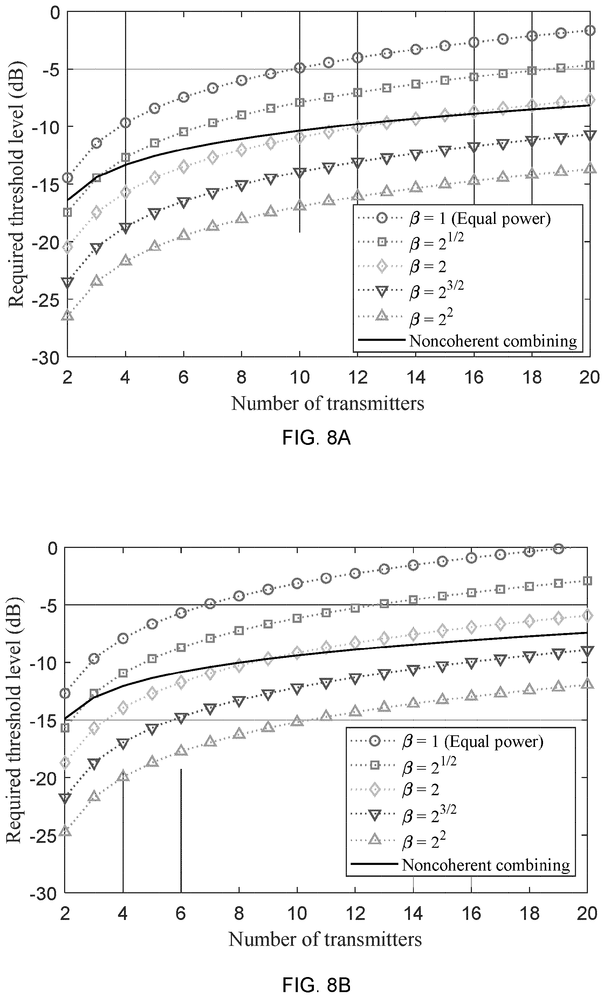

In Figs 8A and 8B, required threshold levels when using the DTPA scheme are compared with that of the noncoherent combination when using the ETPA scheme.

In Fig. 8A, the false alarm rate is $10^{-4}$. When $\beta = 2$, it provides a lower required threshold level than that of the noncoherent combination when the number of transmitters is smaller than 12 ($N_T < 12$).

In Fig. 8B, the false alarm rate is $10^{-6}$. When $\beta = 2$, it provides a lower required threshold level than that of the noncoherent combination when the number of transmitters is smaller than 8 ($N_T < 8$).

It can be seen that although the increase of $\beta$ may reduce the required threshold level at the given false alarm rate, it may degrade the DoA estimation performance (i.e. accuracy and resolution probability).

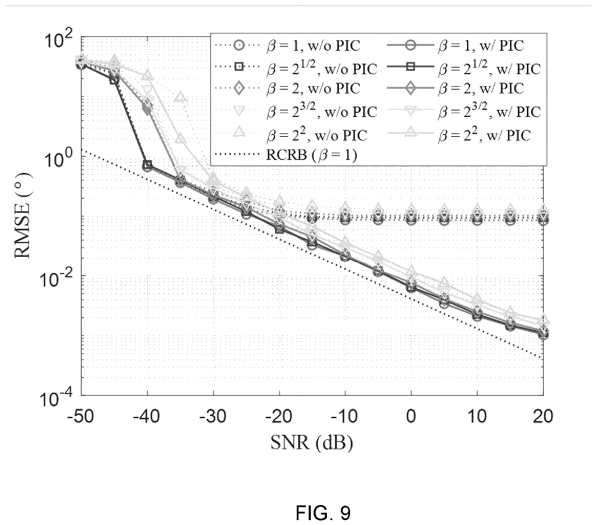

Fig. 9 is a plot of root mean square error (RMSE) of estimated DoA with various dominant power ratio vs SNR.

As shown in Fig. 9, it is worth noting that when $\beta \le 2$, it does not degrade the DoA performance compared to ETPA.

In conclusion, the CDM MIMO radar system and the method for reducing mutual transmitter interferences of a CDM MIMO radar system according to the present description comprises a parallel interference cancellation (PIC) technique for the CDM MIMO radar system, which reduces range (fast-time) and/or Doppler (slow-time) sidelobe level increased by the mutual transmitter interferences, e.g., by detecting target peaks and multiplying with the unique code sequence to reconstruct the reflection signal at each virtual receive element, and by subtracting the parallelly reconstructed total interference signal from the virtual receiving signal (original or of the previous iteration) at each virtual receive element. This is iteratively performed until the sidelobe level converges at a certain level. To improve the target detection accuracy, the DTPA scheme is used, which allocates a larger transmit power to one transmitter only. This allows the reduction of the sidelobe level at the initial stage by improving the signal to mutual-interference-noise ratio (SMINR) in the virtual element generated by the dominant transmitter. The technical effect achieved by the present description at least includes: an improved detection of weaker targets, an improved DoA estimation performance, and a reduced computation complexity for reducing interferences.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A Code-Division Multiplexing, CDM, radar system, comprising:

   a number $N_T$ transmitters (1), each configured to transmit a radar signal being modulated by a unique code sequence, $N_T > 1$, wherein a $mth$ transmitter among the number $N_T$ transmitters is configured to have a transmission power $\gamma_m$ higher than the rest of the number $N_T$ transmitters, $1 \leq m \leq N_T$,
   a number $N_R$ receivers (2), each configured to receive a reflection signal caused by the radar signals transmitted by the number $N_T$ transmitters, and reflected by a target (100), $N_R \geq 1$, and a controller;
   wherein the controller is configured:

   - to generate a number $N$ virtual receive elements $VX$, $N = N_T * N_R$, wherein a virtual receiving signal at each virtual receive element $VX_{p,q}$ represents a signal being:

     received by a $pth$ receiver among the number $N_R$ receivers, $1 \leq p \leq N_R$, and caused by a $qth$ radar signal transmitted by a $qth$ transmitter among the number $N_T$ transmitters, and reflected by the target, $1 \leq q \leq NT$,

   wherein for said each virtual receive element $VX_{p,q}$, the controller is configured:

   - to detect the target based on a reflection signal caused by a $mth$ radar signal transmitted by the $mth$ transmitter, and reflected by the target,
   - based on the detected target, to generate a reconstructed interference signal $\tilde{u}_{p,q}$ caused by the radar signals transmitted by the number $N_T$ trasmitters except for the $qth$ radar signal, and
   - to update the virtual receiving signal at said each virtual receive element $VX_{p,q}$ based on the reconstructed interference signal $\tilde{u}_{p,q}$.

2. The CDM radar system according to claim 1, wherein the controller is configured to:

   - for said each virtual receive element $VX_{p,q}$,

     S1) perform a slow-time and/or a fast-time processing,
     S2) detect the target based on a result of the processing of S1),
     S3) generate a reconstructed reflection signal, which is:

       received by the $pth$ receiver, and caused by the $qth$ radar signal, and reflected by the target; and

   - for said each virtual receive element $VX_{p,q}$,

     S4) generate a reconstructed interference signal $\tilde{u}_{p,q}$ based on reconstructed reflection signals of S3) for virtual receive elements $VX_{p,s}$, $1 \leq s \leq N_T$, $s \neq q$,
     S5) update the virtual receiving signal at said each virtual receive element $VX_{p,q}$ by subtracting the reconstructed interference signal $\tilde{u}_{p,q}$ for reducing mutual transmitter interferences.

3. The CDM radar system according to claim 1 or 2, wherein the controller is configured to generate the number $N$ virtual receive elements $VX$ based on the received reflections signals and the unique code sequences for modulating the radar signals transmitted by the number $N_T$ transmitters.

4. The CDM radar system according to any of claims 2-3, wherein the controller is configured to generate the reconstructed reflection signal based on the detected target and the unique code sequences for modulating the radar signals transmitted by the number $N_T$ transmitters.

5. The CDM radar system according to claim 4, wherein the controller is configured to generate the reconstructed reflection signal by performing an Inverse Discrete Fourier Transform, IDFT.

**6.** The CDM radar system according to any of claims 2-5, wherein the controller is configured to:

repeat S1) to S5), until a difference between a sidelobe level in fast-time spectrum of a current iteration and that of a previous iteration is less than a first threshold; and/or

repeat S1) to S5), until a difference between a sidelobe level in slow-time spectrum of a current iteration and that of a previous iteration is less than a second threshold.

**7.** The CDM radar system according to any of claims 1-6, wherein the controller is configured to estimate a Direction of Arrival, DoA, of the target based on the updated virtual receiving signal at said each virtual receive element $VX_{p,q}$.

**8.** The CDM radar system according to any of claims 1-7, wherein each of the number $N_T$ transmitters is configured to transmit a radar signal being modulated by the unique code sequence along fast-time or short-time.

**9.** The CDM radar system according to any of claims 1-8, wherein a transmitting power $\gamma_1$ of each of said rest of the number $N_T$ transmitters are the same.

**10.** The CDM radar system according to claim 9, wherein $\gamma_m = \beta\gamma_1$, $\beta > 1$, preferably $\beta \le 2$.

**11.** The CDM radar system according to any of claims 1-10, wherein the unique code sequence is a phase-coded sequence.

**12.** The CDM radar system according to any of claims 2-11, wherein any of the slow-time processing and the fast-time processing is a Discrete Fourier Transform, DFT.

**13.** The CDM radar system according to any of claims 1-12, wherein the CDM radar system is any of:

a Frequency-Modulated Continuous Wave, FMCW, radar system, and

a Phase-Modulated Continuous Wave, PMCW, radar system.

**14.** A method for reducing mutual transmitter interferences of a Code-Division Multiplexing, CDM, radar system,

wherein the CDM radar system comprises:

a number $N_T$ transmitters (1), $N_T > 1$, and

a number $N_R$ receivers (2), $N_R \ge 1$;

wherein the method comprises:

- each of the number $N_T$ transmitters transmitting a radar signal being modulated by a unique code sequence, wherein a *mth* transmitter among the number $N_T$ transmitters has a transmission power $\gamma_m$ higher than the rest of the number $N_T$ transmitters, $1 \le m \le N_T$;

- each of the number $N_R$ receivers receiving a reflection signal caused by the radar signals transmitted by the number $N_T$ transmitters, and reflected by a target (100);

- generating a number $N$ virtual receive elements $VX$, $N = N_T * N_R$, wherein a virtual receiving signal at each virtual receive element $VX_{p,q}$ represents a signal being:

received by a *pth* receiver among the number $N_R$ receivers, $1 \le p \le N_R$, and caused by a *qth* radar signal transmitted by a *qth* transmitter among the number $N_T$ transmitters, and reflected by the target, $1 \le q \le NT$,

for said each virtual receive element $VX_{p,q}$,

- detecting the target based on a reflection signal caused by a *mth* radar signal transmitted by the *mth* transmitter, and reflected by the target,

- based on the detected target, generating a reconstructed interference signal $\breve{u}_{p,q}$ caused by the radar signals transmitted by the number $N_T$ trasmitters except for the *qth* radar signal,

- updating the virtual receiving signal at said each virtual receive element $VX_{p,q}$ based on the reconstructed interference signal $\breve{u}_{p,q}$.

**15.** The method according to claim 14, comprising:

- for said each virtual receive element $VX_{p,q}$,

S1) performing a slow-time and/or a fast-time processing,

S2) detecting the target based on a result of the processing of S1),

S3) generating a reconstructed reflection signal, which is:

received by the *pth* receiver, and caused by the *qth* radar signal, and reflected by the target; and

- for said each virtual receive element $VX_{p,q}$,

S4) generating a reconstructed interference signal $\breve{u}_{p,q}$ based on the reconstructed reflection signals of S3) for virtual receive elements $VX_{p,s}$, $1 \le s \le N_T$, $s \ne q$,

S5) updating the virtual receiving signal at said each virtual receive element $VX_{p,q}$ by subtracting the reconstructed interference signal $\breve{u}_{p,q}$ for reducing mutual transmitter interferences.

FIG. 1

FIG. 2

FIG. 3A

FIG. 3B

FIG. 4

FIG. 5A

FIG. 5B

FIG. 6A

FIG. 6B

FIG. 6C

FIG. 7A

FIG. 7B

FIG. 7C

FIG. 8A

FIG. 8B

FIG. 9

| | Europäisches Patentamt European Patent Office Office européen des brevets | **EUROPEAN SEARCH REPORT** | **Application Number** EP 24 21 5300 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SOLODKY GASTON ET AL: "CLEAN Receiver for CDMA MIMO Radar", 2021 29TH EUROPEAN SIGNAL PROCESSING CONFERENCE (EUSIPCO), EURASIP, 23 August 2021 (2021-08-23), pages 1760-1764, XP034038304, DOI: 10.23919/EUSIPCO54536.2021.9616128 [retrieved on 2021-11-15] * the whole document * | 1-15 | INV. G01S7/35 G01S13/08 G01S13/32 G01S13/34 G01S13/42 |
| A | CONTU MICAELA ET AL: "Sidelobe control for a MIMO radar virtual array", 2013 IEEE RADAR CONFERENCE (RADARCON13), IEEE, 29 April 2013 (2013-04-29), pages 1-6, XP032479513, ISSN: 1097-5659, DOI: 10.1109/RADAR.2013.6586112 ISBN: 978-1-4673-5792-0 [retrieved on 2013-08-23] * sec. V * | 1,9,10, 14 | |
| A | LIANG CAN ET AL: "Doppler Sidelobe Suppression via Quasi-Neural Network for ST-CDMA MIMO Radar", IEEE SENSORS JOURNAL, vol. 24, no. 8, 15 April 2024 (2024-04-15), pages 13545-13559, XP093271168, ISSN: 1530-437X, DOI: 10.1109/JSEN.2024.3368482 * sec. II.B, II.C * | 1,14 | TECHNICAL FIELDS SEARCHED (IPC) G01S |

-/--

The present search report has been drawn up for all claims

| Place of search | Date of completion of the search | Examiner |
|---|---|---|
| Munich | 17 April 2025 | Rudolf, Hans |

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 21 5300

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KRZYSZTOF KULPA: "The CLEAN type algorithms for radar signal processing", MICROWAVES, RADAR AND REMOTE SENSING SYMPOSIUM, 2008. MRRS 2008, IEEE, PISCATAWAY, NJ, USA, 22 September 2008 (2008-09-22), pages 152-157, XP031360192, ISBN: 978-1-4244-2688-1 * the whole document * | 1-15 | |
| A | WANG YANHUA ET AL: "Doppler-Coded Joint Division Multiple Access Waveform for Automotive MIMO Radar", ICASSP 2023 - 2023 IEEE INTERNATIONAL CONFERENCE ON ACOUSTICS, SPEECH AND SIGNAL PROCESSING (ICASSP), IEEE, 4 June 2023 (2023-06-04), pages 1-5, XP034450037, DOI: 10.1109/ICASSP49357.2023.10096696 [retrieved on 2023-05-05] * the whole document * | 1-15 | |
| A | CN 107 037 409 B (UNIV PLA AIR FORCE ENGINEERING) 14 September 2021 (2021-09-14) * the whole document * | 1-15 | **TECHNICAL FIELDS SEARCHED (IPC)** |

The present search report has been drawn up for all claims

| Place of search | Date of completion of the search | Examiner |
|---|---|---|
| Munich | 17 April 2025 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................................

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 21 5300

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2025

| Patent document cited in search report | Publication date | Patent family member(s) | Publication date |
|---|---|---|---|
| CN 107037409 B | 14-09-2021 | NONE | |

EPO FORM P0459

For more details about this annex : see Official Journal of the European Patent Office, No. 12/82